# EUROPÄISCHE PATENTSCHRIFT

(11) **EP 2 090 761 B1**
(45) Veröffentlichungstag und Bekanntmachung des Hinweises auf die Patenterteilung: **21.04.2010**
(21) Anmeldenummer: 08171919.7
(22) Anmeldetag: 17.12.2008
(51) Int. Cl.: F01N 3/20

(54) **Abgasnachbehandlungssystem für eine Verbrennungskraftmaschine**
Exhaust gas treatment system for an internal combustion engine
Système de traitement des gaz d'échappement pour un moteur à combustion interne

(30) Priorität: 16.02.2008 DE 102008009564
(43) Veröffentlichungstag der Anmeldung: 19.08.2009
(73) Patentinhaber: Pierburg GmbH, 41460 Neuss (DE)
(72) Erfinder: Lappan Rolf, 50733 Köln (DE); Köster, Andreas, 45149 Essen (DE); Röttges, Riedel, 47918 Tönisvorst (DE); Nowak, Martin, 40476 Düsseldorf (DE)
(74) Vertreter: Patentanwälte ter Smitten

(56) Entgegenhaltungen:
- DE-A1- 19 938 359
- JP-A- 59 126 016
- JP-A- 2002 256 850

## Beschreibung

Die Erfindung betrifft ein Abgasnachbehandlungssystem für eine Verbrennungskraftmaschine mit einer Einleitvorrichtung zum Einleiten eines gasförmigen Reduktionsmittels in einen Abgaskanal, einem SCR-Katalysator, der in Strömungsrichtung des Abgases hinter der Einleitvorrichtung im Abgaskanal angeordnet ist und einem Thermolysereaktor, der in einem Harnstoffzuführkanal vor einer Einleitstelle in den Abgaskanal angeordnet ist, wobei die Einleitstelle in einem engsten Querschnitt einer Einschnürung im Abgaskanal angeordnet ist.

Abgasnachbehandlungssystem für eine Verbrennungskraftmaschine mit einer Einleitvorrichtung zum Einleiten eines gasförmigen Reduktionsmittels in einen Abgaskanal, einem Hydrolysekatalysator, der in Strömungsrichtung des Abgases hinter der Einleitvorrichtung angeordnet ist, einem SCR-Katalysator, der in Strömungsrichtung des Abgases hinter dem Hydrolysekatalysator angeordnet ist und einem Thermolysereaktor, der in einem Harnstoffzuführkanal vor einer Einleitstelle in den Abgaskanal angeordnet ist, wobei die Einleitstelle in einem engsten Querschnitt einer Einschnürung im Abgaskanal angeordnet ist.

Abgasnachbehandlungssysteme, welche das Verfahren der selektiven katalytischen Reduktion nutzen, sind allgemein bekannt und in den letzten Jahren auch zur Abgasnachbehandlung in Verbrennungskraftmaschinen in Automobilen eingeführt worden. Sie dienen zur Verminderung der Stickoxidanteile in Abgasen, welche insbesondere bei mit hohem Lambda betriebenen Motoren einen erheblichen Anteil am Abgasstrom einnehmen.

Die Aufbereitung mittels selektiver katalytischer Reduktion erfolgt üblicherweise in zwei Stufen, wobei in einer ersten Stufe aus einer Ammoniak abspaltenen Substanz, wie beispielsweise Harnstoff, Ammoniak und weitere Nebenprodukte gebildet werden und in einer zweiten Stufe mit dem Ammoniak die Stickoxide des Abgases zu Stickstoff und Wasser reduziert werden. Die Umwandlung des Harnstoffs in Ammoniak erfolgt üblicherweise mittels eines Thermolysereaktors, in dem durch Wärmeeintrag der Harnstoff in Ammoniak und Isocyansäure zerfällt. Gegebenenfalls wird in einem nachgeschalteten Hydrolysekatalysator unter Zugabe von Wasser, welches beispielsweise im Abgas enthalten ist, die Isocyansäure in Ammoniak und Kohlendioxid zersetzt wird. Auf diesen Hydrolysekatalysator kann gegebenenfalls verzichtet werden, wenn der Gasstrom unmittelbar hinter dem Thermolysereaktor einem ausreichend Wasser enthaltenden und warmen Abgasstrom zugemischt wird.

Harnstoff kann dabei sowohl in flüssiger als auch in fester Form in das System eingebracht werden, wobei zur Dosierung von Festharnstoff insbesondere pneumatische Fördersysteme bekannt sind.

Die Ammoniakaufbereitung kann dabei sowohl inline im Abgasstrang als auch in einem separaten Abgasteilstrom erfolgen. Die Umwandlung des Harnstoffs in Ammoniak und Isocyansäure erfolgt üblicherweise außerhalb des Abgashauptstroms, so dass der Ammoniak und Isocyansäure enthaltende Gasstrom zur Hydrolyse dem Abgashauptstrom zugemischt werden muss, da hierin ausreichend Wasser enthalten ist. Hierbei stellt sich das Problem, dass sich aufgrund von Rückströmungen Ablagerungen von Polimerisaten aus der Verdampfung des Harnstoffs an den Wänden des Abgasteilkanals bilden können. Die Rückströmungen können durch den pulsierenden Abgasstrom entstehen, durch den keine stets gleichen Druckdifferenzen vorliegen.

Um eine gleichmäßige Förderung eines gasförmigen Reduktionsmittels zu erhalten, ohne zusätzliche Kompressorleistung zu benötigen wird in der DE 10 2005 029 835 A1 eine Einleitvorrichtung für eine Abgasnachbehandlungssystem beschrieben, bei der ein Abgasteilstrom aus dem Abgashauptkanal in einen Nebenkanal abgezweigt wird, der im weiteren Strömungsverlauf über eine nicht näher definierte Einschnürung verfügt, an deren engstem Querschnitt die Zuführung des gasförmigen Ammoniaks stattfindet. Durch diese Querschnittsverengung des Abgasteilkanals wird ein Unterdruck im Nebenkanal erzeugt, wodurch das Ammoniak in den sich hinter der Einleitstelle wieder erweiternden Abgasteilkanal gesaugt wird.

Nachteilig an einem derartigen System ist jedoch, dass auch dieser nun Ammoniak führende Abgasteilstrom wieder in den eigentlichen Abgashauptkanal zurückgeführt werden muss. In diesem Bereich könnte, bei Verwendung eines Gasstroms mit Isocyansäure bei ungünstigen Druckverhältnissen durch Pulsationen eine Rückströmung auftreten, so dass beispielsweise eine Polymerisation der Isocyansäure an den Wänden des Abgasteilkanals mit unerwünschten Ablagerungen die Folge wäre.

Es ist daher Aufgabe der Erfindung, ein Abgasnachbehandlungssystem mit einer Einleitvorrichtung zu schaffen, mittels derer das Ammoniak und die Isocyansäure zuverlässig bei geringer Förderleistung eines Kompressors zur Harnstoffförderung in den Abgasstrom eingebracht werden können, ohne dass vermehrte Ablagerungen an den Wänden des Abgaskanals auftreten.

Diese Aufgabe wird dadurch gelöst, dass Innenwände der Einleitvorrichtung als Venturidüse ausgebildet sind, welche im Abgaskanal angeordnet ist, wobei die Einleitvorrichtung zumindest teilweise von Abgas umströmt ist und der Harnstoffzuführkanal durch eine Umfangswand des Abgaskanals und eine Umfangswand der Einleitvorrichtung in den engsten Querschnitt der Einleitvorrichtung mündet. Fließt durch eine solche Venturidüse ein gasförmiges Medium, so ist an der engsten Stelle des Rohres der dynamische Druck maximal und der statische Druck minimal. Die Geschwindigkeit des fließenden Gases, hier also des Ammoniaks, steigt im Verhältnis der Querschnitte beim Durchströmen des eingeschnürten Teils an, da überall die gleiche Menge hindurchfließt. Gleichzeitig sinkt der Druck im Harnstoffzuführkanal. Somit entsteht ein Unterdruck, der als Saugdruck genutzt wird. Da dies im Abgaskanal selbst stattfindet, folgen auch keine weiteren Förderprobleme der Mischung aus Abgas und Ammoniak sowie Isocyansäure. Es wird somit Ammoniak und Isocyansäure aktiv in den Abgasstrang gefördert und eine Rückströmung zuverlässig vermieden. Hierdurch wird auch die Bildung von Ablagerungen aus der Verdampfung vom Harnstoff im Thermolysereaktor vermieden. Der radial um das Venturielement fließende Abgasstrom verhindert gleichzeitig eine Anhaftung von Zerfallsprodukten der Isocyansäure an den Wänden des Abgasrohres.

In einer bevorzugten Ausführungsform ist eine Außenwand der Einleitvorrichtung im Abgaskanal beabstandet von der Umfangswand des Abgaskanals angeordnet, wodurch eine vollständige Umströmung der Einleitvorrichtung erreicht wird und die Anhaftung von Zerfallsprodukten an der Wand des Abgaskanals weiter verringert wird.

Vorteilhafterweise sind an der Außenwand der Einleitvorrichtung Stützrippen ausgebildet, über die die Einleitvorrichtung an der Umfangswand des Abgaskanals befestigt ist. Eine derartige Ausführung ist einfach und kostengünstig auch nachträglich in einem Abgasnachbehandlungssystem zu montieren und herzustellen.

Vorteilhaft ist es, wenn an der Außenwand der Einleitvorrichtungen Drallflügel ausgebildet sind. Diese dienen als Axialdrallkörper, so dass die die Einleitvorrichtung umströmenden Gase einen Impuls in Tangentialrichtung erhalten, wodurch die Durchmischung des außen liegenden Abgasstromes mit dem Ammoniak enthaltenden Abgasstrom deutlich verbessert wird und somit ein gleichmäßig beladener Gasstrom dem Hydrolysekatalysator zugeführt werden kann.

In einer hierzu weiterführenden Ausführungsform sind die Stützrippen als Drallflügel ausgebildet, so dass keine zusätzlichen Anbauten an der Einleitvorrichtung benötigt werden und Strömungshindernisse, die zu einem Druckverlust im Abgasstrom führen, möglichst gering gehalten werden.

In einer weiteren vorteilhaften Ausgestaltung sind im Ausströmbereich der Einleitvorrichtung Öffnungen in der Umfangswand der Einleitvorrichtung ausgebildet, durch die die außen liegende Strömung in den Auslaßbereich der Venturidüse strömen kann und die Ammoniak enthaltende Abgasströmung nach außen entweichen kann, was die Durchmischung dieser beiden Ströme zusätzlich verbessert, da eine radiale Geschwindigkeitskomponente der beiden Ströme erzeugt wird.

In einer hierzu weiterführenden Ausführungsform sind diese Öffnungen als schräg zur Strömungsrichtung verlaufende Schlitze ausgebildet, die als Drallnuten dienen, so dass hierdurch zusätzlich eine tangentiale Geschwindigkeitskomponente erzeugt und genutzt werden kann.

Ebenfalls vorteilhaft ist es, den Thermolysereaktor unmittelbar vor der Einleitstelle im Harnstoffzuführkanal anzuordnen, da hierdurch Ablagerungen im Bereich des Harnstoffzuführkanals hinter dem Thermolysereaktor zuverlässig vermieden werden können.

Es wird somit ein Abgasnachbehandlungssystem geschaffen, welches eine stetig ausreichende Förderung des gasförmigen Ammoniaks in den Abgaskanal sicherstellt und zusätzlich für eine Vergleichmäßigung der Verteilung des Ammoniaks im Gesamtabgasstrom führt, wobei unerwünschte Ablagerungen im Bereich der Kanalwände minimiert werden.

Ein Ausführungsbeispiel ist in den Figuren dargestellt und wird nachfolgend beschrieben.

Figur 1 zeigt ein erfindungsgemäßes Abgasnachbehandlungssystem in schematischer Darstellung.

Figur 2 zeigt eine Seitenansicht einer Einleitvorrichtung des erfindungsgemäßen Abgasnachbehandlungssystems in geschnittener Darstellung.

Figur 3 zeigt eine perspektivische Darstellung der Einleitvorrichtung aus Figur 2.

Das in der Figur dargestellte Abgasnachbehandlungssystem für Verbrennungskraftmaschinen besteht aus einem von einem Zylinderblock der Verbrennungskraftmaschine kommenden Abgaskanal 1, in dem eine Einleitvorrichtung 2 sowie nachgeschaltet ein Hydrolysekatalysator 3 sowie ein SCR-Katalysator 4 angeordnet sind. Der Hydrolysekatalysator ist hierbei jedoch nicht zwingend erforderlich.

Die Einleitvorrichtung 2 ist im Innern als Venturidüse mit einer Einschnürung 6 ausgebildet und weist eine Einleitstelle 5 im Bereich des engsten Querschnitts der Einleitvorrichtung 2 auf. In die Einleitstelle 5 mündet ein Harnstoffzuführkanal 7, in dem unmittelbar vor der Einleitstelle 5 ein Thermolysereaktor 8 angeordnet ist. Dieser Thermolysereaktor 8 wird über eine Fördervorrichtung 9 mit Harnstoff versorgt. Diese Fördervorrichtung 9 besteht aus dem Harnstoffzuführkanal 7 über den Feststoffpellets 11, im vorliegenden Beispiel Harnstoffpellets, aus einem Vorratsbehälter 10 über eine Dosiereinrichtung 12 in Richtung zum Thermolysereaktor 8 gefördert werden. Selbstverständlich sind auch andere Ammoniak abgebende Substanzen verwendbar. Zur Förderung dient ein Luftstrom, welcher die über die Dosiereinrichtung 12 in den Harnstoffzuführkanal 7 eingespeisten Harnstoffpellets 11 im Harnstoffzuführkanal 7 fördert, so dass diese zum Thermolysereaktor 8 gelangen.

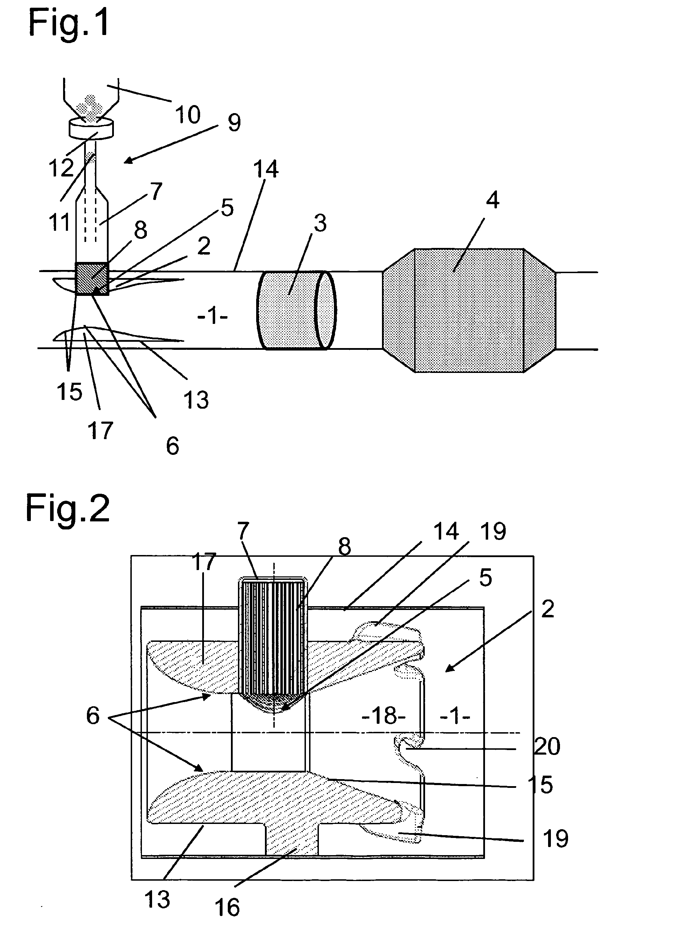

Die Funktionsweise dieses Abgasnachbehandlungssystems gemäß Figur 1 wird im Folgenden beschrieben.

Die Harnstoffpellets 11 werden über die Dosiereinrichtung 12 beispielsweise entsprechend der Werte eines Stickoxidsensors aus dem Vorratsbehälter 10 in den Harnstoffzuführkanal 7 dosiert. Im Harnstoffzuführkanal 7 strömt vorzugsweise trockene Luft, welche über einen nicht dargestellten Kompressor gefördert wird. Der Luftstrom fördert die Harnstoffpellets 11 durch den Harnstoffzuführkanal 7 in einen elektrisch beheizten Thermolysereaktor 8. Hier erfolgt eine thermische Zersetzung der Harnstoffpellets 11 in Ammoniak und Isocyansäure. Die Heizspirale des Thermolysereaktors 8 wird hierzu auf ca. 250 - 400°C aufgeheizt.

Das Ammoniak, die Isocyansäure sowie die Förderluft gelangen von hier zur Einleitstelle 5 und vermischen sich in der Einleitvorrichtung 2 mit dem im Innern strömenden Abgasstrom.

In vorliegender erfindungsgemäßer Ausführung handelt es sich somit lediglich um einen Abgasteilstrom, da die Außenwand 13 der Einleitvorrichtung 2 beabstandet von der Umfangswand 14 des Abgaskanals 1 angeordnet ist. Die Einleitvorrichtung 2 ist konzentrisch innerhalb des Abgaskanals 1 angeordnet und wird von einem Teilstrom im Innern durchströmt und von einem weiteren Abgasteilstrom außen umströmt. Durch den radial um die Einleitvorrichtung 2 strömenden Abgasteilstrom wird eine Anhaftung von Reaktionsprodukten der Isocyansäuren an den Wänden des Abgaskanals 1 zuverlässig verhindert, bevor der Abgasstrom den Hydrolysekatalsator 3 erreicht. Zusätzlich wird das Ammoniak mit der Isocyansäure und der Förderluft durch den vorhandenen Abgasteilstrom im Inneren der Einleitvorrichtung durch die Form der Venturidüse in den Abgasstrom gesaugt, da der dynamische Druck im Bereich der Einschnürung 6 maximal ist und der statische Druck minimal. Die Geschwindigkeit des hier strömenden Abgases steigt somit im Verhältnis der Querschnitte beim Durchströmen des eingeschnürten Teils, da überall dieselbe Menge durchfließt. Gleichzeitig sinkt der Druck im Harnstoffzuführkanal 7, der in die Einschnürung 6 mündet. Damit entsteht hier ein Unterdruck, der zur Unterstützung der Förderung genutzt wird.

Durch den im Innern der Einleitvorrichtung 2 strömenden Abgasteilstrom wird Wasser in den eingeleiteten Gasstrom eingebracht, so dass im hinter der Einleitvorrichtung 2 angeordneten Hydrolysekatalysator 3 mit Hilfe des Wassers die Isocyansäure in Ammoniak und Kohlendioxid zersetzt werden kann. Hierzu sind Temperaturen von etwa 150°C erforderlich, welche bereits durch die einströmenden Abgase sowie die aufgewärmte Förderluft erreicht werden.

Hinter dem Hydrolysekatalysator 3 gelangt nun das Ammoniak mit den im Abgas vorhandenen Stickoxiden, welche reduziert werden sollen, in den SCR-Katalysator 4, in welchem dieses unter Bildung von Stickstoff, Kohlendioxid und Wasser reduziert wird. Vor oder hinter dem SCR-Katalysator 4 können weitere Abgasnachbehandlungseinrichtungen, wie beispielsweise Partikelfilter oder ähnliches vorgesehen werden.

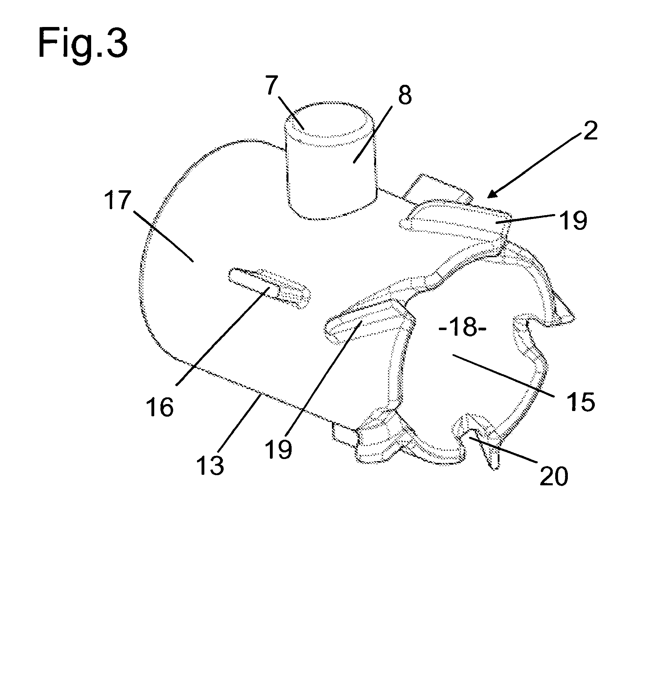

In den Figuren 2 und 3 ist noch einmal die erfindungsgemäße Ausführung der Einleitvorrichtung 2 des Abgasnachbehandlungssystems dargestellt. Es wird deutlich, dass die Innenwände 15 der Einleitvorrichtung 2 die Form einer Venturidüse bilden, in dessen engsten Querschnitt der Harnstoffzuführkanal 7 mündet. Die Befestigung der Einleitvorrichtung 2 im Abgaskanal 1 erfolgt vorzugsweise durch Stützrippen 16, welche an der Außenwand 13 der Einleitvorrichtung 2 angeordnet sind.

Der Harnstoffzuführkanal 7 durchdringt somit sowohl die Umfangswand 14 des Abgaskanals als auch eine Umfangswand 17 der Einleitvorrichtung 2.

Des Weiteren wird aus den Figuren 2 und 3 deutlich, dass in einem Ausströmbereich 18 der Einleitvorrichtung 2 Drallflügel 19 sowie Öffnungen 20 in Form von schräg verlaufenden Schlitzen angeordnet sind. Diese Drallflügel 19 dienen als Axialdrallkörper, so dass dem Abgasteilstrom, der die Einleitvorrichtung in axialer Richtung radial umströmt, ein tangentialer Impuls gegeben wird, wodurch die Durchmischung der Ammoniak reichen Kernströmung mit dem reinen Abgas aus der Zone zwischen der Umfangswand 14 des Abgaskanals 1 und der Außenwand 13 der Einleitvorrichtung 2 deutlich verbessert wird. Die vorhandenen schräg verlaufenden Öffnungen 20 verleihen zusätzlich einen Impuls der äußeren Strömung ins radial Innere der Einleitvorrichtung 2 und der inneren Strömung ins radial Äußere der Einleitvorrichtung 2, wodurch wiederum die Durchmischung vor dem folgenden Hydrolysekatalysator 3 verbessert wird.

Selbstverständlich wäre es denkbar, die Stützrippen 16 als Drallflügel 19 auszuführen, so dass keine zusätzlichen Strömungshindernisse zu einem Druckverlust im außenliegenden durchströmten Abgasteilkanal führen.

Es wird deutlich, dass die erfindungsgemäße Abgasnachbehandlungseinrichtung sowohl die Förderung des Ammoniaks und der Isocyansäure in den Abgasstrom verbessert als auch eine Rückströmung verhindert. Zusätzlich werden Ablagerungen von Polymerisaten aus der Verdampfung des Harnstoffs im Thermolysereaktor im Bereich des Harnstoffzuführkanals 7 oder der Einleitvorrichtung 2 verhindert. Auch Reaktionsprodukte der Isocyansäure an den Wänden des Abgaskanals 1 werden deutlich reduziert. Dennoch wird eine gute Durchmischung des radial um die Einleitvorrichtung strömenden Abgasteilstroms mit dem durch die Einleitvorrichtung 2 strömenden Abgasteilstrom hinter der Einleitvorrichtung 2 erreicht, so dass im Hydrolysekatalysator 3 eine möglichst optimierte gleichmäßige Abgasströmung zur weiteren Reduzierung vorliegt.

Konstruktive Änderungen des Systems sind im Sinne der Erfindung möglich, so dass das beanspruchte Abgasnachbehandlungssystem nicht auf das beschriebene Ausführungsbeispiel beschränkt ist.

## Patentansprüche

1. Abgasnachbehandlungssystem für eine Verbrennungskraftmaschine mit einer Einleitvorrichtung zum Einleiten eines gasförmigen Reduktionsmittels in einen Abgaskanal,
einem SCR-Katalysator, der in Strömungsrichtung des Abgases hinter der Einleitvorrichtung im Abgaskanal angeordnet ist und
einem Thermolysereaktor, der in einem Harnstoffzuführkanal vor einer Einleitstelle in den Abgaskanal angeordnet ist,
wobei die Einleitstelle in einem engsten Querschnitt einer Einschnürung im Abgaskanal angeordnet ist,
**dadurch gekennzeichnet, dass**
Innenwände (15) der Einleitvorrichtung (2) als Venturidüse ausgebildet sind, welche im Abgaskanal (1) angeordnet ist, wobei die Einleitvorrichtung (2) zumindest teilweise von Abgas umströmt ist und
der Harnstoffzuführkanal (7) durch eine Umfangswand (14) des Abgaskanals (1) und eine Umfangswand (17) der Einleitvorrichtung (2) in den engsten Querschnitt der Einleitvorrichtung (2) mündet.

2. Abgasnachbehandlungssystem für eine Verbrennungskraftmaschine nach Anspruch 1,
**dadurch gekennzeichnet, dass**
eine Außenwand (13) der Einleitvorrichtung (2) im Abgaskanal (1) beabstandet von der Umfangswand (14) des Abgaskanals (1) angeordnet ist.

3. Abgasnachbehandlungssystem für eine Verbrennungskraftmaschine nach einem der Ansprüche 1 oder 2,
**dadurch gekennzeichnet, dass**
an der Außenwand (13) der Einleitvorrichtung (2) Stützrippen (16) ausgebildet sind, über die die Einleitvorrichtung (2) an der Umfangswand (14) des Abgaskanals (1) befestigt ist.

4. Abgasnachbehandlungssystem für eine Verbrennungskraftmaschine nach einem der vorhergehenden Ansprüche,
**dadurch gekennzeichnet, dass**
an der Außenwand (13) der Einleitvorrichtung (2) Drallflügel (19) ausgebildet sind.

5. Abgasnachbehandlungssystem für eine Verbrennungskraftmaschine nach Anspruch 4,
**dadurch gekennzeichnet, dass**
die Stützrippen (16) als Drallflügel (19) ausgebildet sind.

6. Abgasnachbehandlungssystem für eine Verbrennungskraftmaschine nach einem der vorhergehenden Ansprüche,
**dadurch gekennzeichnet, dass**
im Ausströmbereich (18) der Einleitvorrichtung (2) Öffnungen (20) in der Umfangswand (17) der Einleitvorrichtung (2) ausgebildet sind.

7. Abgasnachbehandlungssystem für eine Verbrennungskraftmaschine nach Anspruch 6,
**dadurch gekennzeichnet, dass**
die Öffnungen (20) als schräg zur Strömungsrichtung verlaufende Schlitze ausgebildet sind, die als Drallnuten dienen.

8. Abgasnachbehandlungssystem für eine Verbrennungskraftmaschine nach einem der vorhergehenden Ansprüche,
**dadurch gekennzeichnet, dass**
der Thermolysereaktor (8) unmittelbar vor der Einleitstelle (5) im Harnstoffzuführkanal (7) angeordnet ist.

## Claims

1. Exhaust gas treatment system for an internal combustion engine, comprising
a feed device for feeding a gaseous reducing agent into an exhaust channel,
an SCR catalytic converter arranged downstream of the feed device in the exhaust gas channel, seen in the flow direction of the exhaust gas, and
a thermolysis reactor arranged in a urea supply channel upstream of an in-feed site into the exhaust gas channel,
the in-feed site being provided at the narrowest section of a constriction in the exhaust gas channel,
**characterized in that**
inner walls (15) of the feed device (2) are formed as a Venturi nozzle arranged in the exhaust gas channel (1), wherein the feed device (2) is at least partly flown around by exhaust gas, and
the urea supply channel (7) opens into the narrowest section of the feed device (2) through a peripheral wall (14) of the exhaust gas channel (1) and a peripheral wall (17) of the feed device (2).

2. Exhaust gas treatment system for an internal combustion engine of claim 1, **characterized in that** an outer wall (13) of the feed device (2) is arranged in the exhaust gas channel (1) at a distance from the peripheral wall (14) of the exhaust gas channel (1).

3. Exhaust gas treatment system for an internal combustion engine of claim 1 or 2, **characterized in that** supporting ribs (16) are formed on the outer wall (13) of the feed device (2), via which the feed device (2) is fastened to the peripheral wall (14) of the exhaust gas channel (1)

4. Exhaust gas treatment system for an internal combustion engine of one of the preceding claims, **characterized in that** swirl blades (19) are formed on the outer wall (13) of the feed device (2).

5. Exhaust gas treatment system for an internal combustion engine of claim 4, **characterized in that** the supporting ribs (16) are formed as swirl blades (19).

6. Exhaust gas treatment system for an internal combustion engine of one of the preceding claims, **characterized in that** openings (20) are formed in the peripheral wall (17) of the feed device (2) in the outflow region (18) of the feed device (2).

7. Exhaust gas treatment system for an internal combustion engine of claim 6, **characterized in that** the openings (20) are formed as slots extending obliquely to the flow direction, the slots serving as swirl groves.

8. Exhaust gas treatment system for an internal combustion engine of one of the preceding claims, **characterized in that** the thermolysis reactor (8) is arranged in the urea supply channel (7) immediately upstream of the in-feed site (5).

## Revendications

1. Système de traitement des gaz d'échappement pour un moteur à combustion interne, comprenant
un dispositif d'introduction pour introduire un agent réducteur gazeux dans un conduit des gaz d'échappement,
un catalyseur du type SCR positionné dans ledit conduit des gaz d'échappement en aval du dispositif d'introduction, vue dans la direction d'écoulement des gaz d'échappement, et
un réacteur de thermolyse disposé dans un conduit d'alimentation en urée en amont d'un endroit d'introduction dans ledit conduit des gaz d'échappement,
ledit endroit d'introduction étant disposé dans la section la plus étroite d'une striction dans ledit conduit des gaz d'échappement,
**caractérisé en ce que**
des parois intérieures (15) du dispositif d'introduction (2) sont formées comme une buse de Venturi disposée dans ledit conduit des gaz d'échappement (1), ledit dispositif d'introduction étant au moins partiellement passé par l'écoulement des gaz d'échappement, et
ledit conduit d'alimentation en urée (7) s'ouvre dans la section la plus étroite dudit dispositif d'introduction (2), traversant une paroi périphérique (14) dudit conduit des gaz d'échappement (1) et une paroi périphérique (17) dudit dispositif d'introduction (2).

2. Système de traitement des gaz d'échappement pour un moteur à combustion interne selon la revendication 1, **caractérisé en ce qu'**une paroi extérieure (13) dudit dispositif d'introduction (2) est disposée à distance de la paroi périphérique (14) du conduit des gaz d'échappement (1).

3. Système de traitement des gaz d'échappement pour un moteur à combustion interne selon la revendication 1 ou 2, **caractérisé en ce que** des nervures de support (16) sont formées sur la paroi extérieure (13) du dispositif d'introduction (2), ledit dispositif d'introduction (2) étant fixé sur ladite paroi périphérique (14) dudit conduit des gaz d'échappement (1) par lesdites nervures de support.

4. Système de traitement des gaz d'échappement pour un moteur à combustion interne selon l'une quelconque des revendications précédentes, **caractérisé en ce que** des ailes hélicoïdales (19) sont formées sur la paroi extérieure (13) dudit dispositif d'introduction (2).

5. Système de traitement des gaz d'échappement pour un moteur à combustion interne selon la revendication 1, **caractérisé en ce que** lesdites nervures de support (16) sont formées comme ailes hélicoïdales (19).

6. Système de traitement des gaz d'échappement pour un moteur à combustion interne selon l'une quelconque des revendications précédentes, **caractérisé en ce que**, dans la zone d'échappement (18) dudit dispositif d'introduction (2), des ouvertures (20) sont formées dans la paroi périphérique (17) dudit dispositif d'introduction (2).

7. Système de traitement des gaz d'échappement pour un moteur à combustion interne selon la revendication 6, **caractérisé en ce que** lesdites ouvertures (20) sont formées comme des fentes obliques par rapport à la direction d'écoulement, servant comme rainures hélicoïdales.

8. Système de traitement des gaz d'échappement pour un moteur à combustion interne selon l'une quelconque des revendications précédentes, **caractérisé en ce que** le réacteur de thermolyse (8) est disposé dans le conduit d'alimentation en urée (7) immédiatement en amont dudit endroit d'introduction (5).
